# EUROPÄISCHE PATENTSCHRIFT

(11) **EP 2 638 095 B1**
(45) Veröffentlichungstag und Bekanntmachung des Hinweises auf die Patenterteilung: **09.07.2014**
(21) Anmeldenummer: 11782405.2
(22) Anmeldetag: 07.11.2011
(51) Int. Cl.: C08G 63/00, C08G 65/00

(54) **POLYETHERESTER-POLYOLE**
POLYETHERESTER POLYOLS
POLYÉTHERESTERPOLYOLS

(30) Priorität: 09.11.2010 EP 10190487
(43) Veröffentlichungstag der Anmeldung: 18.09.2013
(73) Patentinhaber: BASF SE, 67056 Ludwigshafen (DE)
(72) Erfinder: KUNST, Andreas, 67063 Ludwigshafen (DE); ELING, Berend, 49448 Lemförde (DE); BRUCHMANN, Bernd, 67251 Freinsheim (DE); LÖFFLER, Achim, 67346 Speyer (DE)
(86) Internationale Anmeldenummer: PCT/EP2011/069490
(87) Internationale Veröffentlichungsnummer: WO 2012/062683

(56) Entgegenhaltungen:
- EP-A2- 0 124 070
- EP-A2- 0 246 455
- US-A- 2 779 783
- US-A- 3 254 060
- US-A1- 2007 265 367
- DONGXIAN WANG ET AL: "Synthesis, Characterization, and Properties of novel Polyetherester Polyols and Developed Polyurethanes", JOURNAL OF APPLIED POLYMER SCIENCE, Bd. 103, 2007, Seiten 417-424, XP002665377, Wiley Periodicals

## Beschreibung

Die vorliegende Erfindung betrifft hydrophobe Polyetherester-Polyole, ein Verfahren zu deren Herstellung und die Verwendung der erfindungsgemäßen Polyetherester-Polyole zur Herstellung von Polyurethanen.

Polyetherester-Polyole, also solche Polyole, die sowohl Polyether-Einheiten als auch Polyestereinheiten in einer Molekülkette aufweisen, können beispielsweise durch Ringöffnungspolymerisation von Alkylenoxiden an hydroxyfunktionelle Starter in Anwesenheit von cyclischen Anhydriden hergestellt werden. Als cyclische Anhydride kommen beispielsweise ungesättige Anhydride wie Maleinsäureanhydrid oder gesättige Anhydride wie Bernsteinsäureanhydrid oder auch aromatische Anhydride wie Phthalsäureanhydrid in Frage. Die Copolymerisation der cyclischen Anhydride mit Alkylenoxiden wie Propylenoxid erfolgt in aller Regel in Anwesenheit von Alkoxilierungskatalysatoren. Hierbei haben sich insbesondere DoppelmetallcyanidKatalysatoren bewährt, die zu guten Umsätzen und hohen Einbauraten führen.

Polyesterpolyole weisen in der Regel gute mechanische Eigenschaften auf, sind jedoch hydrolyseempfindlich. Polyetherpolyole sind in der Regel nicht hydrolyseempfindlich, weisen jedoch meist keine sehr guten mechanischen Eigenschaften auf.

Polyetherester-Polyole vereinen oftmals beide Vorteile, ohne die entsprechenden Nachteile. Das bedeutet, dass Polyetherester-Polyole in der Regel gute mechanische Eigenschaften aufweisen, ohne zugleich hydrolyseempfindlich zu sein.

Bei zahlreichen Anwendungen, zum Beispiel bei Polyurethanen, die aus Polyolen, wie Polyetherester-Polyolen, hergestellt werden können, sind hydrophobe Eigenschaften erwünscht. Diese führen in der Regel zu einer verringerten Wasseraufnahme bei Polyurethanen, die aus den jeweiligen Polyolen hergestellt werden. Bei Polyurethanen (PU) sind derartige Eigenschaften oft gewünscht. So zeigen Materialien aus Polyurethanen mit einer geringen Wasseraufnahme meist verbessertes Alterungsverhalten während des Gebrauchs. Zudem können hydrophob modifizierte Polyurethane eine veränderte Oberflächenstruktur aufweisen, was sich z. B. in einer verbesserten Rutschfestigkeit oder in einem angenehmeren Gefühl beim Anfassen (verbesserte Haptik) äußern kann. Ein klarer Vorteil bietet eine verringerte Wasseraufnahme in Beschichtungen, Klebstoffen, Dichtungen und Elastomeren (im Allgemeinen bei "CASE"-Anwendungen - Coatings, Adhesives, Sealants, Elastomers-Anwendungen). In diesen Anwendungen wird oft die maximale Wasseraufnahme des Polyurethans unter bestimmten Testbedingungen festgelegt, denn es ist aus Erfahrungen bekannt, dass Polyurethane mit einer geringeren Wasseraufnahme in diesen Anwendungen meist verbesserte Eigenschaften aufweisen. So kann die Aufnahme von Wasser die Härte des Polyurethans und die Anbindung des Polyurethans an Substrate reduzieren. In Ummantelungen von elektronischen Bauteilen ist ebenfalls ein Polyurethan mit geringerer Wasseraufnahme erwünscht, weil die Aufnahme von Wasser zu einer Erhöhung der dielektrischen Konstante und Erniedrigung des spezifischen Durchgangswiderstands führt.

Diese Eigenschaften könnten zum Beispiel durch den Einsatz hydrophober Polyole, insbesondere Polyetherester-Polyole, in einem Verfahren zur Herstellung von Polyurethanen erreicht werden.

Im Folgenden sind einige Literaturbeispiele genannt, die die DMC-katalysierte Copolymerisation von cyclischen Anhydriden mit Alkyenoxiden beschreiben:
US2007/0265367A1 beschreibt UV-härtbare Polyole, die durch Copolymerisation von ungesättigten Säureanhydriden mit Propylenoxid unter zur Hilfenahme von DMC-Katalysatoren herstellbar sind. Als ungesättigte Säureanhydride werden in diesem Dokument cis-1,2,3,6-Tetrahydrophthalsäureanhydrid sowie Maleinsäureanhydrid erwähnt.

Das Dokument J. Appl. Polym. Sci. 2007, 103, 417 beschreibt die Copolymerisation von Maleinsäureanhydrid, Phthalsäureanhydrid und Bernsteinsäureanhydrid mit Propylenoxid mit Hilfe von DMC-Katalysatoren.

GB 1 310 461 A1 beschreibt ebenfalls die Copolymerisation von Alkylenoxiden mit cyclischen Anhydriden. Als cyclische Anhydride sind in diesem Dokument Phthalsäure-, Bernsteinsäure-, 3,4-Dichlorphthalsäure-, Tetrahydrophthalsäure- , Chlorensäure-, 2,3-Dimethylmaleinsäure, 4,5-Dimethylphthalsäure-, 2-Phenylethylmaleinsäure sowie 2-Tolylmaleinsäureanhydrid erwähnt worden.

Bekanntermaßen ist es schwierig, Polyesterole aus Dicarbonsäuren und Glykolen, die einen Alkylsubstituenten benachbart zu einer reaktiven Hydroxylgruppe aufweisen, herzustellen. Bei der Herstellung von Polyesterolen mit höherem Molekulargewicht ist die Konzentration reaktiver Gruppen niedrig, was somit zu einer reduzierten Reaktionsgeschwindigkeit führt. Falls Glykole mit einem Alkylsubstituenten benachbart zu einer Hydroxygruppe verwendet werden, kann die Reaktionsgeschwindigkeit gegen Ende der Umsetzung so niedrig werden, dass während der für die Herstellung des Polyesterols gegebenen Zeit nicht alle Carbonsäuregruppen zu Estergruppen umgesetzt worden sind. Dadurch liegt die Säurezahl eines derartigen Polyols in der Regel vergleichsweise hoch, z.B. höher als 20 mg KOH/ g, wodurch es bei der Herstellung von Polyurethanen eventuell nicht einsetzbar ist.

Die bisher vorhandene Literatur auf dem Gebiet der Herstellung von Polyetherester-Polyolen, wie sie zum Beispiel in den oben genannten Dokumenten verkörpert ist, bietet daher bisher keine oder jedenfalls keine befriedigende Lösung des Problems, wie Polyetherester-Polyole mit hydrophoben Eigenschaften hergestellt werden können.

Die Aufgabe der Erfindung bestand somit darin, hydrophobe Polyole durch ein einfaches Verfahren bereitzustellen, wobei die Polyole bevorzugt eine niedrige Säurezahl aufweisen sollten. Die Produkte sollten verbesserte hydrophobe Eigenschaften in Polyurethanen liefern, was wiederum zu verbesserten Quellungswerten führen sollte.

Die Aufgabe konnte dadurch gelöst werden, dass mindestens ein Alkylenoxid unter zur Hilfenahme eines Katalysators an mindestens einen H-funktionellen Starter in Gegenwart mindestens eines alkylkettensubstituierten Säureanhydrids oder eines alkylkettensubstituierten Lactons unter Ausbildung von hydrophoben Polyetherester-Polyolen angelagert wird.

Ein Gegenstand der vorliegenden Erfindung ist somit ein Polyetherester-Polyol mit einer Säuerzahl kleiner als 20 mg KOH/ g, bevorzugt kleiner als 10 mg KOH/ g, besonders bevorzugt kleiner als 5 mg KOH/ g und folgender Zusammensetzung:

Y-{O-[CH₂-CHR1-O]ₘ-{[C(O)-CHR2-CHR3-X-O-]_{q}-[CH₂-CHR5-O]ₙ}_{z}-[CH₂-CHR4-O]ᵣ-H}ₛ,

wobei
- m, n und z jeweils ganze Zahlen sind, und wobei m im Bereich 0-10, n im Bereich 1-20, und z im Bereich von 1-50 liegt, und wobei
- X ausgewählt ist aus =CO oder -(CH₂)ₒ-, wobei o eine ganze Zahl ist und im Bereich von 0-10 liegt, und wobei
- Y der Kohlenwasserstoffrest eines polyhydroxyfunktionellen Polyols mit einer Funktionalität von 1,5 - 8 und einem Äquivalentgewicht von 100 bis 1000, bevorzugt 100 bis 500, ist, und wobei
- R1 ausgewählt ist aus der Gruppe umfassend -H ; -(CH₂)p-CH₃ ; -Aryl ; -Cycloalkyl, wobei p eine ganze Zahl ist und im Bereich von 0-22 liegt, und wobei
- R2 ausgewählt ist aus der Gruppe umfassend Wasserstoff und die aliphatischen Kohlenwasserstoffe mit 5 bis 150 Kohlenstoffatomen
- R3 ausgewählt ist aus der Gruppe umfassend Wasserstoff und die aliphatischen Kohlenwasserstoffe mit 5 bis 150 Kohlenstoffatomen, wobei wenigstens einer der beiden Reste R2 und R3 nicht Wasserstoff ist, und wobei
- R4 ausgewählt ist aus der Gruppe umfassend -H ; -(CH₂)ₚ-CH₃ ; -Aryl ; -Cycloalkyl, wobei p eine ganze Zahl ist und im Bereich von 0-22 liegt, und wobei
- R5 ausgewählt ist aus der Gruppe umfassend -H ; -(CH₂)ₚ-CH₃ ; -Aryl ; -Cycloalkyl, wobei p eine ganze Zahl ist und im Bereich von 0-22 liegt, und wobei
- q eine ganze Zahl im Bereich von 1 bis 10 ist, r eine ganze Zahl im Bereich von 1 bis 10 ist, und wobei s eine ganze Zahl im Bereich von 1 bis 10 ist.

In einer bevorzugten Ausführungsform der Erfindung ist X eine Carbonyl-Einheit.

In einer weiteren bevorzugten Ausführungsform der Erfindung liegt m im Bereich 1 bis 5, bevorzugt 1 bis 3.

In einer weiteren bevorzugten Ausführungsform der Erfindung liegt n im Bereich 1 bis 10.

In einer weiteren bevorzugten Ausführungsform der Erfindung liegt z im Bereich 1 bis 30.

In einer weiteren bevorzugten Ausführungsform der Erfindung sind R1, R4 und R5 jeweils unabhängig voneinander ausgewählt aus der Gruppe umfassend -H und -(CH₂)ₚ-CH₃, wobei p = 0. In einer weiteren bevorzugten Ausführungsform der Erfindung ist mindestens einer der beiden Reste R2 und R3 ein aliphatischer Kohlenwasserstoff mit 16 bis 22 oder 50 bis 70 Kohlenstoffatomen.

In einer weiteren bevorzugten Ausführungsform der Erfindung ist mindestens einer der beiden Reste R2 und R3 ein aliphatischer Kohlenwasserstoff mit 16 bis 22 oder 50 bis 70 Kohlenstoffatomen.

In einer weiteren bevorzugten Ausführungsform der Erfindung ist R2 ein aliphatischer Kohlenwasserstoff mit 16 oder 18 Kohlenstoffatomen.

In einer weiteren bevorzugten Ausführungsform der Erfindung ist R3 ein aliphatischer Kohlenwasserstoff mit 16 oder 18 Kohlenstoffatomen.

In einer weiteren bevorzugten Ausführungsform der Erfindung liegt o im Bereich von 1 bis 5, bevorzugt 1 bis 3, und/ oder q im Bereich von 1 bis 5.

In einer weiteren bevorzugten Ausführungsform der Erfindung liegt r im Bereich von 1 bis 5 und/ oder R4 ist ausgewählt aus der Gruppe H und -(CH₂)ₚ-CH₃, wobei p = 0.

In einer weiteren bevorzugten Ausführungsform der Erfindung liegt s im Bereich von 2 bis 10. In einer weiteren bevorzugten Ausführungsform der Erfindung sind R1 und R5 jeweils -(CH₂)ₚ-CH₃, wobei p = 0 und R4 Wasserstoff ist.

In einer weiteren bevorzugten Ausführungsform der Erfindung ist Y der Kohlenwasserstoffrest eines polyhydroxyfunktionellen Polyols mit einer Funktionalität von 1,5 bis 4.

In einer weiteren bevorzugten Ausführungsform der Erfindung ist X eine Carbonyleinheit, wobei q 1 ist, n 1 bis 10 ist, z 1 bis 10 ist, und wobei R1, R4 und R5 jeweils -(CH₂)ₚ-CH₃ sind, und wobei r im Bereich von 1 bis 5 und s im Bereich von 1 bis 10 liegt, und wobei einer der beiden Reste R2 und R3 ein aliphatischer Kohlenwasserstoff mit 16 oder 18 Kohlenstoffatomen ist, und wobei der andere der beiden Reste R2 und R3 Wasserstoff ist, und wobei p = 0 ist.

In einer weiteren bevorzugten Ausführungsform der Erfindung ist Y ein auf einem natürlichen Öl basierendes mindestens dihydroxyfunktionelles Polyol.

In der vorliegenden Offenbarung werden die Begriffe "biobasierte Verbindung/ biobasierter Rohstoff", "nachwachsende Verbindung/ nachwachsender Rohstoff", "natürliche Verbindung/ natürlicher Rohstoff" (wie zum Beispiel "natürliches Öl") einheitlich verwendet und bezeichnen alle Verbindungen, die nicht aus fossilen Rohstoffen, wie Erdöl, Erdgas oder Kohle, hergestellt werden, im Gegensatz zu den Verbindungen der Petrochemie, die letzten Endes auf Erdgas oder Erdöl als Ausgangsmaterialien zurückzuführen sind.

Der Ausdruck "fettbasierte Verbindung/fettbasierter Rohstoff" bezeichnet eine spezielle Klasse biobasierter Verbindungen, und beschreibt Verbindungen, die von Fettsäuren abgeleitet sind, insbesondere Fettsäureester. Dabei bezieht sich der Begriff "Fettsäureester" auf Mono-, Di- oder Triester von Fettsäuren; die letztgenannten Triester von Fettsäuren werden auch als Triglyceride bezeichnet. Triglyceride sind Hauptbestandteile von natürlichen Fetten oder Ölen, wie zum Beispiel Rizinusöl oder Sojaöl.

Das Äquivalentgewicht des erfindungsgemäßen Polyetherester-Polyols beträgt bevorzugt 400 bis 6000.

Ein weiterer Gegenstand der vorliegenden Erfindung ist ein Verfahren zur Herstellung eines der oben definierten erfindungsgemäßen Polyetherester-Polyole durch katalysierte Umsetzung mindestens eines Alkylenoxids mit mindestens einem H-funktionellen Starter in Gegenwart mindestens eines alkylkettensubstituierten Säureanhydrids und/oder eines alkylkettensubstituierten Lactons.

Die H-funktionellen Starter sind bevorzugt ausgewählt aus der Gruppe der üblicherweise verwendeten Polyalkohole mit einer Funktionalität F von 1,5 bis 8 bzw. deren Umsetzungsprodukten mit den oben genannten Alkylenoxiden. Ferner sind fettbasierte Startermoleküle wie hydroxygruppenhaltige Fette (zum Beispiel Rizinusöl oder hydroxylgruppenmodifizierte natürliche Fette und Öle) oder hydroxyfunktionalisierte Fettderivate (unter anderem fettbasierte Dimerdiole wie zum Beispiel Sovermol® 908 von der Firma Cognis GmbH) ebenfalls bevorzugt. Die hydroxyfunktionalisierten Fettderivate können zum Beispiel auf Rizinusöl, Sojaöl, Palmöl oder Sonnenblumenöl basieren.

Bevorzugt wird genau ein H-funktioneller Starter verwendet.

Die Herstellung der genannten H-funktionellen Starter kann zum Beispiel durch Epoxidierung/ Ringöffnung, Hydroformylierung/ Hydrierung, Ozonolyse, Direktoxidation oder Lachgasoxidation/ Reduktion erfolgen.

In einer weiteren bevorzugten Ausführungsform des erfindungsgemäßen Verfahrens ist der H-funktionelle Starter ausgewählt aus der Gruppe umfassend Alkylenoxid-Anlagerungsprodukte polyfunktioneller Alkohole.

In einer weiteren bevorzugten Ausführungsform des erfindungsgemäßen Verfahrens wird ein DMC (Doppelmetallcyanid)-Katalysator verwendet.

Als DMC (Doppelmetallcyanid)-Katalysatoren werden bevorzugt Co-Zn, Fe-Zn, und/ oder Ni-Znbasierte Doppelmetallcyanidkatalysatoren verwendet; besonders bevorzugt werden Zinkhexacyanocobaltat-Katalysatoren verwendet, wie sie beispielsweise in US 3 404 109, US 3 427 256, US 3 427 334, US 3 427 335, US 3 829 505, US 3 941 849, US 4 472 560, US 4 477 589, US 5 158 922, US 5 470 813, US 5 482 908, US 5 545 601, EP 0 700 949, EP 0 743 093, EP 0 761 708; WO 97/40086, WO 98/16310, WO 00/47649 sowie JP 4 145 123 beschrieben wurden. Die Katalysatorkonzentration liegt üblicherweise zwischen 5 und 1000 ppm, bevorzugt zwischen 20 und 250 ppm, besonders bevorzugt zwischen 50 und 150 ppm, bezogen auf die Gesamtmasse des herzustellenden Endproduktes.

Der DMC-Katalysator kann entweder direkt als Feststoff oder suspendiert in einem Polyetherol zusammen mit dem Starter vorgelegt werden. Als Suspensionspolyetherole werden in der Regel nach dem Stand der Technik Alkylenoxid-Anlagerungsprodukte von zwei-, drei- oder vierfunktionellen Alkoholen wie Monopropylenglykol, Dipropylenglykol, Monoethylenglykol, Diethylenglykol, 1,4-Butandiol, Glycerin, Trimethylolpropan oder Pentaerythritol eingesetzt. Diese Suspensionspolyetherole haben üblicherweise ein Molekulargewicht zwischen 300 und 5000 g/mol, bevorzugt zwischen 300 und 1000 g/mol und werden in der Regel über die alkalimetallkatalysierte Anlagerung von Alkylenoxiden erhalten.

In einer weiteren bevorzugten Ausführungsform des erfindungsgemäßen Verfahrens wird zusätzlich zu dem DMC-Katalysator eine Verbindung als Co-Katalysator verwendet, die Esterifizierungs- und/ oder Transesterifizierungsreaktionen katalysiert.

Bevorzugt wird der Co-Katalysator ausgewählt aus der Gruppe umfassend Lewissäuren, Organo-Zinn-Carboxylate, Titanverbindungen, Metallalkoxide, Aryloxide enthaltend Aluminium, Lithium, Titan und Lanthanide. Besonders bevorzugt wird der Co-Katalysator ausgewählt aus der Gruppe umfassend Titan-Verbindungen mit der allgemeinen Formel Ti(OR)₄, wobei R eine Alkylgruppe mit 1 bis 4 C-Atomen ist. Beispiele hierfür umfassen, sind jedoch nicht beschränkt auf, Tetraethyltitanat, Tetraisopropyltitanat, Tetratertbutyltitanat, sowie Mischungen davon.

Falls eine Co-Katalysator vorhanden ist, ist der DMC-Katalysator bevorzugt in einer Menge von 5 bis 2000 ppm, besonders bevorzugt 20 to 250 ppm, vorhanden, während der Co-Katalysator in einer Menge von 1 bis 1000 ppm vorhanden ist, jeweils bezogen auf die Gesamtmasse des Endprodukts.

Die genannten Menge von DMC-Katalysator und Co-Katalysator können gleichzeitig bei Beginn der Reaktion auf einmal zugegeben werden, können aber auch nacheinander in verschiedenen Phasen der Reaktion zugegeben werden.

Der Begriff "alkylkettensubstituiertes Säureanyhdrid" bzw. "alkylkettensubstituiertes Lacton" bezieht sich auf Säureanyhdride bzw. Lactone mit jeweils mindestens einem Alkylsubstituenten, der 5 bis 150, bevorzugt 10 bis 100 Kohlenstoffatome aufweist. Der jeweilige Alkylsubstituent kann dabei geradkettig oder verzweigt sein.

In einer bevorzugten Ausführungsform wird als alkylkettensubstituiertes Säureanyhdrid alkylkettensubstituiertes Bernsteinsäureanhydrid verwendet.

Bevorzugt enthält das jeweilige Säureanhydrid bzw. Lacton genau einen Alkylsubstituenten. Als alkylkettensubstituierten Säureanhydride kommen, wie erwähnt, in einer Ausführungsform des erfindungsgemäßen Verfahrens bevorzugt alkylkettensubstituierte Bernsteinsäureanhydride, beispielsweise C6-C20-substituierte Bernsteinsäureanhydride zum Einsatz. Kommerziell erhältliche Produkte sind beispielsweise Pentasize 8 oder Pentasize 68 (C₁₈-Alkenylbemsteinsäureesteanhydrid bzw. C₁₆/C₁₈-Alkenylbernsteinsäureesteanhydrid der Firma Trigon Chemie GmbH). Andere Beispiele für alkylsubstituierte Bernsteinsäureanhydride stellen die Poly(isobutylen)-substitutierten Bernsteinsäureanhydride (allgemein unter der Abkürzung PIBSA bekannt) dar. Das PIBSA-Molekül sollte vorzugsweise ein Molekulargewicht von 500-2000 aufweisen. Ein kommerziell erhältliches Produkt ist beispielsweise Glissopal^{®} SA der Firma BASF SE.

Besonders bevorzugt werden C16- oder C18-Bemsteinsäureanhydride oder eine Kombination aus C16- und C18-substituierten Bemsteinsäureanhydriden verwendet.

Wie erwähnt, wird in einer bevorzugten Ausführungsform des erfindungsgemäßen Verfahrens ein alkylkettensubstituiertes Säureanhydrid verwendet; bevorzugt ist dabei das alkylkettensubstituierte Säureanyhdrid ausgewählt aus der Gruppe umfassend Alkylbernsteinsäureanyhdride mit 16 oder 18 Kohlenstoffatomen, polyisobutensubstituiertes Bernsteinsäureanhydrid, sowie Mischungen daraus.

Als Alkylenoxide können zum Beispiel Propylenoxid (PO), Ethylenoxid (EO), 1,2-Butylenoxid, 2,3-Butylenoxid, 1,2-Pentenoxid, 2,3-Epoxypropylneododecanoat (Cardura® E10P, Hexion Specialty Chemicals, Inc.) oder Styroloxid verwendet werden. Bevorzugt wird genau ein Alkylenoxid verwendet.

In einer bevorzugten Ausführungsform des erfindungsgemäßen Verfahrens ist das Alkylenoxid ausgewählt aus der Gruppe umfassend Butylenoxid, Propylenoxid und Ethylenoxid; besonders bevorzugt wird Propylenoxid verwendet.

Das Verfahren der Copolymerisation wird üblicherweise so geführt, dass der hydroxyfunktionelle Starter zusammen mit dem alkylsubstituierten Säureanhydrid oder Lacton, wie z. B. Bernsteinsäureanhydrid, und dem DMC-Katalysator, sowie ggf. dem Co-Katalysator, in dem Reaktor vorgelegt wird, und der Katalysator durch Zugabe von Alkylenoxid aktiviert wird. Nach erfolgter Aktivierung werden die Alkylenoxide kontinuierlich weiterdosiert. In einer Ausführungsform der Erfindung kann das alkylsubstituierte Säureanhydrid, wie z. B. Bernsteinsäureanhydrid, und/ oder der hydroxyfunktionelle Starter zusammen mit den Alkylenoxiden kontinuierlich in den Reaktor dosiert werden. Der Prozess kann auch vollständig kontinuierlich geführt werden.

Die Reaktion wird üblicherweise bei Temperaturen zwischen 80 - 200 °C, vorzugsweise zwischen 100 und 160°C durchgeführt.

Die erfindungsgemäßen Polyole werden mittels Ringöffnungspolymerisation von Alkylenoxiden und cyclischen Anhydriden und/oder Lactonen hergestellt. Die so hergestellten Polyole sind Telechele und haben ein gut definiertes Molekulargewicht und Funktionalität. Die Funktionalität liegt im Bereich zwischen 2-8, bevorzugt zwischen 2-4, besonders bevorzugt zwischen 2-3. Die Verwendung von DMC- Katalysatoren bei der Synthese ermöglicht die Herstellung von Polyolen mit höheren Molekulargewichten. Die aus dem erfindungsgemäßen Verfahren erhältlichen hydrophoben Polyetherester-Polyole besitzen in der Regel OH-Zahlen zwischen 15 und 200 mg KOH/g, vorzugsweise zwischen 20 und 80 mg KOH/g.

Die Auswahl der Starter, der Alkylenoxide und der alkylsubstituierten cyclischen Säureanhydride und der Gewichtsanteil der jeweiligen Substanzen ermöglichen die Herstellung von Polyetheresterhybridpolyolen mit unterschiedlichen hydrophoben Eigenschaften. Die Einstellung der Funktionalität und des Molekulargewichts ermöglichen die Feineinstellung des Polyols.

Der Monomereinbau in den erfindungsgemäßen Polyetherester-Polyolen kann laut Theorie alternierend sein. Das heißt, dass das molare Verhältnis von Epoxid zum Anhydrid 1:1 sein kann. In der Regel wird die molare Menge des Epoxids größer sein als die des Säureanhydrids. So weisen die erfindungsgemäßen Polyetherester-Polyole von 1 bis 45 Mol-%, vorzugsweise zwischen 2 und 30 Mol-% alkylsubstituierte Säureanhydrid-Einheiten, bevorzugt Bernsteinsäureanhydrid-Einheiten, auf, bezogen auf den Monomeranteil.

Obwohl nicht zwingend erforderlich, ist es in der Praxis meist so, dass die Zahl des einzubauenden hydrophoben alkylsubstituierten cyclischen Säureanhydrids abhängig sein wird von dem Molekulargewicht des Säureanhydrides. Wenn z.B. PIBSA-Moleküle mit einem Molekulargewicht von 1000 eingesetzt werden, dann werden in der Regel pro Polyol-Molekül 1-3 PIBSA-Monomere eingebaut. Wenn beispielsweise C18-Alkenylbemsteinsäureanhydrid (z.B. Pentasize 8 der Firma Trigon GmbH) verwendet wird, kann der molare Anteil höher sein.

Die Architektur der Polyole kann über die Dosierungsweise der Komponenten und der Katalysatoren weiter gesteuert werden. So ist es möglich, Starter, Anhydride und den DMC-Katalysator und gegebenenfalls Lewis-Säure-Katalysatoren in den Reaktor vorzulegen und die Alkylenoxide kontinuierlich zuzugeben. Abhängig von der gewählten Katalysatormenge und der Reaktionstemperatur können die beiden Ringöffnungspolymerisationen mehr oder weniger parallel nebeneinander ablaufen. Wenn aber in dem Reaktor zunächst Starter, Anhydrid und gegebenenfalls Lewis-Säure Katalysator zugegeben wird, wird zuerst der Halbester aus der Reaktion zwischen Anhydrid und Starter gebildet. Nach weiterer Zugabe des DMC-Katalysators und der Alkylenoxide wird auch die Ethergruppen-bildende Alkoxylierungsreaktion ablaufen.

Ein weiterer Gegenstand der vorliegenden Erfindung ist ein Verfahren zur Herstellung von Polyurethanwerkstoffen, bei dem man a) organische Polyisocyanate mit b1) erfindungsgemäßen Polyetheresterolen, gegebenenfalls b2) weiteren Polyolen sowie Kettenverlängerungs- und/oder Vernetzungsmitteln, c) Treibmitteln, d) Katalysatoren und gegebenenfalls e) Hilfsmitteln und Zusatzstoffen zu einer Reaktionsmischung vermischt und diese Reaktionsmischung zur Reaktion bringt, wobei die Polyole (b2) ausgewählt werden aus der Gruppe umfassend Polyetherole (b2i), Polyesterole (b2ii), Polycarbonatpolyole (b2iii) und Polyacrylatpolyole (b2iv).

Ein weiterer Gegenstand der vorliegenden Erfindung ist die Verwendung von erfindungsgemäßen Polyetheresterpolyolen zur Herstellung von Polyurethanwerkstoffen.

Die zur Herstellung der erfindungsgemäßen Polyurethanwerkstoffe verwendeten Polyisocyanate a) umfassen Verbindungen auf Basis von Methandiphenyldiisocyanat (im Folgenden als MDI bezeichnet), Toluoldiisocyanat, Isophorondiisocyanat, Naphthalindiisocyanat, H12MDI oder Hexamethylendiisocyanat. Unter MDI wird 2,4-MDI, 4,4'-MDI und höherkernige Homologe sowie Gemische daraus verstanden.

Das Polyisocyanat a) kann in Form von Polyisocyanatprepolymeren eingesetzt werden. Diese Polyisocyanatprepolymere sind erhältlich, indem vorstehend beschriebenes MDI, beispielsweise bei Temperaturen von 30 bis 100 °C, bevorzugt bei etwa 80 °C, mit erfindungsgemäßen Polyetheresterolen (b1), Polyetherolen (b2i) und/oder Polyesterolen (b2ii) zum Prepolymer umgesetzt werden. Als Polyetheresterole (b1) werden vorzugsweise die vorstehend beschriebenen Polyetherester-Polyole eingesetzt. Der NCO-Gehalt der Prepolymere liegt dabei vorzugsweise z.B. für MDI-basierte Prepolymeren im Bereich von 2 % bis 30 %, besonders bevorzugt von 5 % bis 28% und insbesondere von 10 % bis 25 %.

Als Polyetherole (b2i) können zum Beispiel Polyole mit OH-Werten von 10-800 mgKOH/g, bevorzugt 20-100 mg KOH/ g, insbesondere 25-50 mg KOH/g. In der Herstellung der Polyole (b2i) können als Alkylenoxide zum Beispiel Propylenoxid (PO), Ethylenoxid (EO), 1,2-Butylenoxid, 2,3-Butylenoxid, 1,2-Pentenoxid, oder Styroloxid verwendet werden, bevorzugt sind Propylenoxid und Ethylenoxid. Besonders geeignet sind Propylenoxid-basierte Polyole mit einem Ethylenoxid-Cap von 10 bis 30 Gew.%, insbesondere 13 bis 23%, und einer mittleren Funktionalität von 2-6, insbesondere 3-5. Mit mittlerer Funktionalität ist hier die mittlere Funktionalität der Starter oder des Starter-Gemisches gemeint. Als Starter können beispielsweise Glyzerin, Trimethylolpropan, Pentaerythritol, Sorbitol, Sucrose, Triethanolamin und Ethylendiamin oder Gemische davon eingesetzt werden. Auch Poly-THF (Poly-Tetrahydrofuran) kann als Komponente (b2i) verwendet werden.

Geeignete Polyesterpolyole (b2ii) können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1 zu 1 bis 1 zu 1,8, vorzugsweise von 1 zu 1,05 bis 1 zu 1,2, katalysatorfrei oder vorzugsweise in Gegenwart von Veresterungskatalysatoren, zweckmäßigerweise in einer Atmosphäre aus Inertgas, wie z. B. Stickstoff, Kohlenmonoxid, Helium, Argon u. a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert. Auch Polycaprolactone können als Komponente (b2ii) eingesetzt werden.

Als Kettenverlängerungs- und/oder Vernetzungsmittel können Diole und/oder Triole mit Molekulargewichten kleiner als 400 g/mol, vorzugsweise 60 bis 300 g/mol verwendet werden. In Betracht kommen beispielsweise aliphatische, cycloaliphatische und/oder araliphatische Diole mit 2 bis 14, vorzugsweise 4 bis 10 Kohlenstoffatomen, wie z. B. Ethylenglykol, 1,3,-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur erfindungsgemäßen Herstellung der Polyurethane Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Summe der Polyolverbindungen, zum Einsatz.

Als Treibmittel (c) können die aus der Polyurethanchemie allgemein bekannten Fluorchlorkohlenwasserstoffe (FCKW) sowie hoch- und/oder perfluorierte Kohlenwasserstoffe verwendet werden. Erfindungsgemäß können weiterhin insbesondere aliphatische und/oder cycloaliphatische Kohlenwasserstoffe, insbesondere Pentan und Cyclopentan oder Acetale, wie z. B. Methylal und CO₂, als Treibmittel eingesetzt werden. Diese physikalischen Treibmittel werden üblicherweise der Polyolkomponente zugesetzt. Sie können jedoch auch der Isocyanatkomponente oder als Kombination sowohl der Polyolkomponente als auch der Isocyanatkomponente zugesetzt werden.

Weiterhin ist es möglich und üblich, als Treibmittel der Polyolkomponente Wasser in einer Menge von 0,5 bis 15 Gew.-%, vorzugsweise 1 bis 5 Gew.-%, bezogen auf das Gesamtgewicht der eingesetzten Komponenten, zuzusetzen. Der Wasserzusatz kann in Kombination mit dem Einsatz der anderen beschriebenen Treibmittel erfolgen.

Vorzugsweise wird im Sinne der Erfindung Wasser als Treibmittel benutzt.

Als Katalysatoren (d) zur Herstellung der Polyurethane werden insbesondere Verbindungen verwendet, die die Reaktion der reaktiven Wasserstoffatome, insbesondere Hydroxylgruppen enthaltender Verbindungen, mit den organischen, gegebenenfalls modifizierten Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat, und die Dialkylzinn-(IV)-salze von organischen Carbonsäuren.

Geeignet sind beispielsweise Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidin, wie 2,3-Dimethyl-3,4,5,6-tetrahydropyrimidin, tertiäre Amine, wie Dimethylcyclohexylamin, Triethylendiamin, Triethylamin, Tributylamin, Dimethylbenzylamin, N-Methyl-, N-Ethyl-, N-Cyclohexyl-morpholin, N,N,N',N'-Tetramethylethylendiamin, N,N,N',N'-Tetramethylbutandiamin, N,N,N',N'-Tetramethylhexan-1,6-diamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylamino-propyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kalium-isopropylat, sowie Alkalisalze von langkettigen Fettsäuren mit 10 bis 20 C-Atomen und gegebenenfalls seitenständigen OH-Gruppen.

Vorzugsweise verwendet werden 0,001 bis 5 Gew.-%, insbesondere 0,05 bis 2 Gew. % Katalysator bzw. Katalysatorkombination, bezogen auf das Gewicht der Aufbaukomponenten.

Der Reaktionsmischung zur erfindungsgemäßen Herstellung der Polyurethane können gegebenenfalls noch weitere Hilfsmittel und/oder Zusatzstoffe (e) zugesetzt werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige und halogenfreie Flammschutzmittel. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmässig erwiesen, 5 bis 50 Gew.-%, vorzugsweise 5 bis 30 Gew.-%, der genannten Flammschutzmittel für jeweils 100 Gew.-% der übrigen eingesetzten Komponenten zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur des Polyurethans zu regulieren. Genannt seien beispielsweise Emulgatoren, wie die Natriumsalze der Rizinusölsulfate oder Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl, und Zellregler, wie Paraffine, Fettalkohole und Dimethylpolysiloxane. Als Stabilsatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-%, bezogen auf 100 Gew.-% der übrigen eingesetzten Komponenten eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestem und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der übrigen eingesetzten Komponenten, eingesetzt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe so wie auch zuTreibmitteln, Tensiden und Katalysatoren sind der Fachliteratur, beispielsweise der Monographie von J. H. Saunders und K. C. Frisch "High Polymers" Band XVI, "Polyurethanes", Teil 1 und 2, Verlag Interscience Publishers 1962 bzw. 1964, dem oben zitierten Kunststoffhandbuch, "Polyurethane", Band VII, Hanser-Verlag München, Wien, 1. bis 3. Auflage, oder The Polyurethanes book, Randall and Lee, Eds, Wiley, 2002 zu entnehmen.

Die erfindungsgemäßen Polyurethanwerkstoffe werden nach dem one-shot- oder Prepolymer-Verfahren mit Hilfe der Niederdruck- oder Hochdrucktechnik hergestellt.

Insofern es Schäume betrifft, können die Schäume als Blockschaum oder als Formschaum hergestellt werden. Insofern es Kompaktmaterialien betrifft können unterschiedliche Gießverfahren angewendet werden. Diese Verfahrensweisen werden beispielsweise beschrieben in The Polyurethanes book, Randall and Lee, Eds, Wiley, 2002.

Die Verwendungsmöglichkeit der erfindungsgemäßen Polyole für Polyurethanbauteile ist sehr vielfältig, da es viele Anwendungen gibt, bei denen eine verbesserte Hydrophobie von Vorteil ist.

Die erfindungsgemäßen Polyole können beispielsweise in geschäumten oder in kompakten PU-Materialien eingesetzt werden. Hauptanwendungsgebiet für die erfindungsgemäßen Polyole ist in den Bereichen Elastomeren, Beschichtungen, Klebstoffen und Dichtungsmaterialien. Das Anwendungsgebiet von Elastomeren ist sehr breit, hier gemeint sind thermoplastische Polyurethane (TPU), microzellulare Elastomeren, Gießelastomeren, RIM-Elastomeren, Sprühelastomeren, elastomere Beschichtungen und 'Millable Gums'. Beispiele für microzelluläre Elastomere sind Integralschaumstoffe, Schuhsohlen und Zusatzfedern für die Automobilindustrie (Cellasto®, BASF SE). Sprühelastomere werden vor allem in Beschichtungsanwendungen verwendet. Weiter können die erfindungsgemäßen Polyole eingesetzt werden für die Herstellung von Weichschaumstoffen, Halbhartschaumstoffen und Teppichbodenschaumstoffen, so wie auch beispielsweise in Verpackungsschaumstoffen, Hartschaumstoffen, RIM-Teile wie z.B. Kfz-Stoßfänger und andere Kfz-Außenteile und Kunstleder.

Die erfindungsgemäßen Polyole können, wie oben beschrieben, für die Herstellung von Präpolymeren durch Umsetzung mit Diisocyanaten verwendet werden. Somit können die erfindungsgemäßen Polyole für die Herstellung von Polyurethanmaterialien neben der direkten Verwendung in der A-Komponente der Formulierungen auch in Form eines Präpolymers verwendet werden. In diesem Zuge ist zu erwähnen, dass der Präpolymeranteil in der Präpolymer-Polyol-Mischung zwischen 10% bis 90% betragen kann. Diese Präpolymer-Polyol-Mischungen werden beispielsweise verwendet, wenn die erfindungsgemäßen Polyole in sogenannten Einkomponenten-feuchtaushärtende Systemen, wie z. B. für Beschichtung-, Klebe- und Dichtungsmaterialien, eingesetzt werden.

Somit sind auch Polyurethane, die aus einem erfindungsgemäßen Polyol erhältlich sind, ein weiterer Gegenstand der vorliegenden Erfindung.

Nachfolgend werden einige Beispiele zur Verdeutlichung der Erfindung angeführt. Die Beispiele sind keinesfalls einschränkend für den Umfang der Erfindung zu werten, sondern sind nur illustrativ zu verstehen.

### Beispiele:

Lupranol^{®} 1200 ist ein zweifunktionelles Polyetherol der Firma BASF Polyurethanes GmbH mit einer Hydroxyzahl von 250 mg KOH/g bestimmt nach DIN 53240.

Lupranol^{®} 1100 ist ein zweifunktionelles Polyetherol der Firma BASF Polyurethanes GmbH mit einer Hydroxyzahl von 105 mg KOH/g bestimmt nach DIN 53240.

Pentasize 8 ist eine C18-Alkenylbernsteinsäureanhydrid der Firma Trigon GmbH.

Glissopal^{®} SA ist ein Poly(isobutylen)bernsteinsäureanhydrid mit Molekulargewicht 1000 g/mol (PIBSA 1000) der Firma BASF SE.

Sovermol^{®} 908 ist ein fettbasiertes Dimerdiol der Firma Cognis GmbH.

Für das Synthesebeispiel 6 wurde Rizinusöl der Firma Alberdingk & Boley GmbH mit der Bezeichnung Albodry Rizinusöl Pharma DAB Spezial (Hydroxyzahl = 165 mg KOH/g bestimmt nach DIN 53240) verwendet.

### Synthesebeispiel 1

634 g Lupranol^{®} 1200, 1345 g Pentasize 8 und 20,5 g einer DMC-Katalysatorsuspension (5,4%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 2360 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4500 g des erfindungsgemäßen Polyetherester-Polyols in Form einer viskosen Flüssigkeit erhalten.

### Analytik:

| | |
|---|---|
| Hydroxyzahl = 39,9 mg KOH/g | DIN 53240 |
| Viskosität = 1603 mPas | DIN 13421 |
| Säurezahl = 1,01 mg KOH/g | DIN 53402 |
| Wasserwert = 0,02 % | DIN 51777 |

### Synthesebeispiel 2

1017 g Lupranol^{®} 1200, 1356 g Pentasize 8 und 20,8 g einer DMC-Katalysatorsuspension (5,4%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 1948 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4500 g des erfindungsgemäßen Polyetherester-Polyols in Form einer viskosen Flüssigkeit erhalten.

### Analytik:

| | |
|---|---|
| Hydroxyzahl = 56,9 mg KOH/g | DIN 53240 |
| Viskosität = 931 mPas | DIN 13421 |
| Säurezahl = 0,93 mg KOH/g | DIN 53402 |
| Wasserwert = 0,02 % | DIN 51777 |

### Synthesebeispiel 3

In einem 5L-Stahlautoklav werden 795,4 g Lupranol^{®} 1200 mit 1183,8 g Pentasize 8 versetzt und die Reaktionsmischung wird für 300 Minuten auf 150°C erhitzt. Das resultierende säurefunktionalisierte Intermediat (Säurezahl = 107,3 mg KOH/g bestimmt nach DIN 53402) wird anschließend mit 659 g Propylenoxid bei 150 °C autokatalytisch bis zur Druckkonstanz umgesetzt. 1822,1 g des so erhaltenen Propylenoxid-gecappten Intermediates (Hydroxyzahl = 90 mg KOH/g bestimmt nach DIN 53240 und Säurezahl = 0,434 mg KOH/g bestimmt nach DIN 53402) werden anschließend mit 17,1 g einer DMC-Katalysatorsuspension (5,4%ig in Lupranol^{®} 1100) versetzt. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, wird die Reaktionstemperatur auf 160°C erhöht und es werden weitere 1622,1 g Propylenoxid innerhalb von 150 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 3500 g des erfindungsgemäßen Polyetherester-Polyols in Form einer viskosen Flüssigkeit erhalten.

### Analytik:

| | |
|---|---|
| Hydroxyzahl = 44,2 mg KOH/g | DIN 53240 |
| Viskosität = 1104 mPas | DIN 13421 |
| Säurezahl = 0,306 mg KOH/g | DIN 53402 |
| Wasserwert = 0,02 % | DIN 51777 |

### Synthesebeispiel 4

846 g Sovermol^{®} 908, 1437 g Pentasize 8 und 22,9 g einer DMC-Katalysatorsuspension (5,4%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 2527 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 5000 g des erfindungsgemäßen Polyetherester-Polyols in Form einer viskosen Flüssigkeit erhalten.

### Analytik:

| | |
|---|---|
| Hydroxyzahl = 37,0 mg KOH/g | DIN 53240 |
| Viskosität = 1678 mPas | DIN 13421 |
| Säurezahl = 0,68 mg KOH/g | DIN 53402 |
| Wasserwert = 0,01 % | DIN 51777 |

### Synthesebeispiel 5

902 g Lupranol^{®} 1200, 1202 g Glissopal^{®} SA und 18,5 g einer DMC-Katalysatorsuspension (5,4%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 1704 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4000 g des erfindungsgemäßen Polyetherester-Polyols in Form einer viskosen Flüssigkeit erhalten.

### Analytik:

| | |
|---|---|
| Hydroxyzahl = 61,3 mg KOH/g | DIN 53240 |
| Viskosität = 1876 mPas | DIN 13421 |
| Säurezahl = 1,45 mg KOH/g | DIN 53402 |
| Wasserwert = 0,01 % | DIN 51777 |

### Synthesebeispiel 6

1505 g Rizinusöl, 777 g Pentasize 8 und 22,7 g einer DMC-Katalysatorsuspension (5,4%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 2485 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4900 g des erfindungsgemäßen Polyetherester-Polyols in Form einer viskosen Flüssigkeit erhalten.

### Analytik:

| | |
|---|---|
| Hydroxyzahl = 47,0 mg KOH/g | DIN 53240 |
| Viskosität = 1358 mPas | DIN 13421 |
| Säurezahl = 0,04 mg KOH/g | DIN 53402 |
| Wasserwert = 0,03 % | DIN 51777 |

### Synthesebeispiel 7

790 g Lupranol^{®} 1200, 1249 g Pentasize 8 und 20,0 g einer DMC-Katalysatorsuspension (5,47%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 2170 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4400 g eines Polyetherester-Polyols in Form einer viskosen Flüssigkeit erhalten.

### Analytik:

| | |
|---|---|
| Hydroxyzahl = 48,9 mg KOH/g | DIN 53240 |
| Säurezahl = 0,66 mg KOH/g | DIN 53402 |
| Wasserwert = 0, 0 1 % | DIN 51777 |

### Synthesebeispiel 8

892 g Lupranol^{®} 1200 , 1411 g Pentasize 8 und 0,5 g Titan(IV)-tert-butoxid sowie 22,8 g einer DMC-Katalysatorsuspension (5,47%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 2479 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4900 g eines Polyetherester-Polyols in Form einer viskosen Flüssigkeit erhalten.

### Analytik:

| | |
|---|---|
| Hydroxyzahl = 51,2 mg KOH/g | DIN 53240 |
| Viskosität = 873 mPas | DIN 13421 |
| Säurezahl = 0,27 mg KOH/g | DIN 53402 |
| Wasserwert = 0,016% | DIN 51777 |

### Synthese-Gegenbeispiel A:

915,3 g Lupranol^{®} 1200, 605 g Phthalsäureanhydrid und 31,0 g einer DMC-Katalysatorsuspension (5,47%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 3296,3 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 5000 g eines Polyetherester-Polyols in Form einer viskosen Flüssigkeit erhalten.

### Analytik:

| | |
|---|---|
| Hydroxyzahl = 46,1 mg KOH/g | DIN 53240 |
| Viskosität = 1313 mPas | DIN 13421 |

### Synthese-Gegenbeispiel B:

617,8 g Lupranol^{®} 3300, 481,3 g Phthalsäureanhydrid und 23,1 g einer DMC-Katalysatorsuspension (5,47%ig in Lupranol^{®} 1100) werden in einem 5L-Reaktor vorgelegt und dreimal mit Stickstoff inertisiert und die Startermischung für 60 Minuten unter Vakuum (15 mbar) bei 130°C getrocknet. Dann werden bei 130°C zunächst 200 g Propylenoxid zur Reaktionsmischung dosiert. Nachdem die Aktivierung des Katalysators erfolgt ist, die sich durch einen Druckabfall in Kombination mit der Ausbildung von Exothermie bemerkbar macht, werden weitere 3512,5 g Propylenoxid innerhalb von 120 Minuten zur Reaktionsmischung dosiert. Nach beendeter Dosierung folgt eine Nachreaktion bis zur Druckkonstanz. Die Reaktionsmischung wird im Vakuum vom Restmonomer befreit. Es werden 4800 g eines Polyetherester-Polyols in Form einer viskosen Flüssigkeit erhalten.

### Analytik:

| | |
|---|---|
| Hydroxyzahl = 52,7 mg KOH/g | DIN 53240 |
| Viskosität = 1594 mPas | DIN 13421 |
| Säurezahl = 0,11 mg KOH/g | DIN 53402 |

### Synthese-Gegenbeispiel C:

1740,0 g Pentasize 8, 961,3 g Tripropylenglykol und 0,2 g Dibutylzinndilaurat (DBTL) werden bei Raumtemperatur in einen 4L-Vierhalskolben, der mit einer Destillationsbrücke ausgestattet ist, eingewogen. Anschließend wird die Reaktionsmischung auf 185 °C für 14h bei 450 mbar erhitzt. Nach beendeter Reaktion wird die Reaktionsmischung abgekühlt und das Reaktionsprodukt analysiert.

### Analytik:

| | |
|---|---|
| Hydroxyzahl: 56 mg KOH/g | DIN 53240 |
| Säurezahl: 54 mg KOH/g | DIN 53402 |

### Prüfkörperherstellung

Materialien für die Herstellung der Prüfkörper:

| | |
|---|---|
| Byk 080 | Entschäumer von der Firma Byk, Wesel |
| Thorcat 535 | Quecksilberkatalysator der Firma Thor Chemie, Speyer |
| 1,4-Butandiol | Kettenverlängerer von der Firma BASF, Ludwigshafen |
| DPG | Dipropylenglycol von der Firma BASF, Ludwigshafen |
| Dabco 33LV | Amin-Katalysator, Air Products |
| Zeolitpaste | K-Ca-Na-Zeolite A in Rizinusöl, |

Isocyanat 1 Ein Gemisch aus Lupranat® MP102 und Lupranat® MM103, von der Firma BASF, Ludwigshafen, in einem Gewichtsverhältnis 1/1. Lupranat® MP102 ist ein Prepolymer basierend auf 4,4'MDI und einem Glykolgemisch, es hat einen NCO-Wert von 23,0%. Lupranat® MM103 ist ein Carbodiimid-modifiziertes 4,4'MDI und hat einen NCO-Wert von 29,5%. Das Gemisch hat einen NCO-Wert von 26,2%.

Isocyanat 2 Lupranat® MP102

Die Reaktionskomponenten und Additive werden bei Raumtemperatur gelagert und verarbeitet. Die Polyol-Komponente (Komponente A, siehe Tabellen) wird angesetzt und anschließend ca. 20 min stehen gelassen. Die Menge des zugegebenen Isocyanats wird so berechnet, dass der Index 99,9, beziehungsweise 105 beträgt. Die Komponente A wird mit dem Isocyanat für 60 s in einem Speed-Mixer verrührt. Das Gemisch wird in eine beheizte, offene Form mit der Abmessung 15*20*0,6 cm³ ausgegossen. Die Formtemperatur beträgt 70°C. Die entstehende Platte bleibt für eine halbe Stunde in der heißen Form, bevor sie aus der Form genommen wird. Anschließend werden die Platten für vier Stunden bei 80°C temperiert. Die Proben werden einen Tag bei Raumtemperatur gelagert und anschließend auf 2 mm gespalten und auf mechanische Eigenschaften getestet.

### Quelltest:

Aus der 2 mm-Platte wird ein Stück mit den Maßen 4x4cm² herausgeschnitten und die Masse bestimmt. Anschließend wird die Probe in ein mit Wasser gefülltes 2,5L Glas gelegt, das für 5 Stunden in einem 100°C heißen Heizschrank verbleibt. Um das Auftreiben der Probe zu verhindern, wird ein Gitter eingesetzt. Nachdem das Glas aus dem Heizschrank genommen ist, wird die Probe herausgenommen und mit Filtrierpapier leicht abgetrocknet. Wenn die Probe auf Raumtemperatur abgekühlt ist, wird die Masse bestimmt und daraus der Quellgrad in Prozent berechnet mittels ((m2-m1)/m1)x100%)). Der Messfehler liegt unter 0,1%; Unterschiede bei den Messwerten von 0,2% sind signifikant.

### Anwendungs-Beispiele 1-5:

Die erfindungsgemäßen Polyole der Synthesebeispiele 1 bis 5 haben alle eine Funktionalität von 2. Sie wurden wie oben beschrieben zu Polyurethanelastomerplatten verarbeitet. Die Quellgrade (Tabelle 1) liegen in allen Fällen unter 1,2%.

**Tabelle 1:**

| **Anwendungs-Bsp. Nr.** | | | **1** | **2** | **3** | **4** | **6** |
|---|---|---|---|---|---|---|---|
| | | | | | | | |
| Polyol aus Synthesebsp. 1 | | Teile | 95 | | | | |
| Polyol aus Synthesebsp. 2 | | Teile | | 95 | | | |
| Polyol aus Synthesebsp. 3 | | Teile | | | 95 | | |
| Polyol aus Synthesebsp. 4 | | Teile | | | | 95 | |
| Polyol aus Synthesebsp. 5 | | Teile | | | | | 95 |
| Thorcat 535 | | Teile | 0,7 | 0,7 | 0,7 | 0,7 | 0.7 |
| BYK-080 | | Teile | 0,3 | 0,3 | 0,3 | 0,3 | 0.3 |
| 1 ,4-Butandiol | | Teile | 4,0 | 4,0 | 4,0 | 4,0 | 4,0 |
| | | | | | | | |
| Isocyanate 1 | Index = 99,9 | | | | | | |
| | | | | | | | |
| | | | | | | | |
| 2 mm Platte | Norm | | | | | | |
| Dichte | ISO 1183-1, A | g/cm^3 | 1,06 | 1,071 | 1.064 | 1.041 | 1,063 |
| Shore-Härte | DIN 53505 | MPa | 51 | 49 | 50 | 54 | 43 |
| Zugfestigkeit | DIN 53504 | MPa | 9 | 7 | 14 | 8 | 8 |
| Reißdehnung | DIN 53504 | % | 400 | 330 | 550 | 290 | 650 |
| Quellgrad | % Gew.zunahme | | 0,9 | 1,0 | 1,0 | 1,2 | 1,2 |

### Anwendungs-Beispiel 6:

Das Polyol aus Synthesebeispiel 6 hat eine Funktionalität von 3. Es wurde wie oben beschrieben zu einer Polyurethanelastomerplatte verarbeitet. Der Quellgrad (Tabelle 2) liegt bei maximal 1,6%.

**Tabelle 2:**

| Anwendungsbsp. Nr. | | 6 |
|---|---|---|
| | | |
| | Einheit | |
| Polyol aus Synthesebsp. 6 | Teile | 100 |
| DPG | Teile | 3,0 |
| Dabco 33 LV | Teile | 0,8 |
| K-Ca-Na-Zeolite A in Rizinusöl | Teile | 5,0 |
| | | |
| Isocyanat 2 | Index = 105 | |
| | | |
| | | |
| Shore A Härte | MPa | 44 |
| Zugfestigkeit | MPa | 2,0 |
| Reißdehnung | % | 170 |
| Dichte | g/cm3 | 1,064 |
| Quellgrad | % Gew.-Zunahme | 1,6 |

### Anwendungs-Beispiele 7-8:

Die erfindungsgemäßen Polyole aus den Synthese-Beispielen 7 und 8 haben eine Funktionalität von 2. Sie wurden wie oben beschrieben in Polyurethanelastomerplatten verarbeitet. Die Quellgrade (Tabelle 3) zeigen, dass das Polyurethan auf Basis von dem Polyetherester-Polyol hergestellt in Gegenwart von Lewis-Säure Katalysator deutlich hydrophober ist in Vergleich mit Polyurethan auf Basis von dem Polyetherester-Polyol hergestellt ohne Lewis-Säure Katalysator.

**Tabelle 3:**

| Anwendungsbsp. Nr. | | 7 | 8 |
|---|---|---|---|
| | | | |
| | Einheit | | |
| Polyol aus Synthesebsp. 7 | Teile | 95,0 | |
| Polyol aus Synthesebsp. 8 | Teile | | 95 |
| Thorcat 535 | Teile | 0,7 | 0,7 |
| BYK-080 | Teile | 0,3 | 0,3 |
| 1,4-Butandiol | Teile | 4 | 4 |
| Isocyanat 1 | | Index = 99,9 | Index = 99,9 |
| | | | |
| | | | |
| Dichte | g/cm3 | 1,067 | 1,067 |
| Shore-Härte | MPa | 49 | 45 |
| Zugfestigkeit | MPa | 7 | 8 |
| Reißdehnung | % | 370 | 500 |
| Quellgrad | % Gew.-Zunahme | 1,1 | 0,8 |

### Anwendungs-Gegenbeispiele A und B:

Das Polyol aus Synthese-Gegenbeispiel A hat eine Funktionalität von 2, das Polyol aus Synthese-Gegenbeispiel B eine Funktionalität von 3. Diese Polyole wurden in den entsprechenden Systemen zu Polyurethanelastomerplatten verarbeitet. Die Quellung (Tabelle 4) in Wasser der Proben A und B ist deutlich schlechter als die der Proben 1-5.

**Tabelle 4: Anwendungs-Gegenbeispiele:**

| Anwendungs-Gegenbsp. | | A | B |
|---|---|---|---|
| | | | |
| | Einheit | | |
| Polyol aus Synthese-Gegenbsp. A | Teile | 95 | |
| Polyol aus Synthese-Gegenbsp. B | Teile | | 100 |
| DPG | Teile | | 3,0 |
| Dabco 33 LV | Teile | | 0,8 |
| K-Ca-Na-Zeolite A in Rizinusöl | Teile | | 5,0 |
| Thorcat 535 | Teile | 0,7 | |
| BYK-080 | Teile | 0,3 | |
| 1,4-Butandiol | Teile | 4,0 | |
| | | | |
| Isocyanat 1 | | Index = 99,9 | |
| Isocyanat 2 | | | Index = 105 |
| | | | |
| Quellgrad | % Gew. Zunahme | 2,1 | 2,7 |

### Gegenbeispiel C:

Es war nicht möglich, eine blasenfreie Platte aus dem Polyol aus Synthese-Gegenbeispiel C herzustellen. Die Blasenbildung ist eine Folge der hohen Säurezahl.

Es ist aus den Versuchsergebnissen somit ersichtlich, dass Polyetherester-Polyole hergestellt werden können, die, wenn eingesetzt in der Herstellung eines Polyurethans, die hydrophoben Eigenschaften des Polyurethans deutlich verbessern.

## Patentansprüche

1. Polyetherester-Polyol mit einer Säurezahl kleiner als 20 mg KOH/g, gemessen nach DIN 53402, und folgender Zusammensetzung:
Y-{O-[CH₂-CHR1-O]ₘ-{[C(O)-CHR2-CHR3-X-O-]_{q}-[CH₂-CHR5-O]ₙ}_{z}-[CH₂-CHR4-O]ᵣ-H}ₛ,
wobei
• m, n und z jeweils ganze Zahlen sind, und wobei m im Bereich 0-10, n im Bereich 1-20, und z im Bereich von 1-50 liegt, und wobei
• X ausgewählt ist aus =CO oder -(CH₂)ₒ-, wobei o eine ganze Zahl ist und im Bereich von 0-10 liegt, und wobei
• Y der Kohlenwasserstoffrest eines polyhydroxyfunktionellen Polyols mit einer Funktionalität von 1,5 - 8 und einem Äquivalentgewicht von 100 bis 1000 ist, und wobei
• R1 ausgewählt ist aus der Gruppe umfassend -H; -(CH₂)ₚ-CH₃; -Aryl; -Cycloalkyl, wobei p eine ganze Zahl ist und im Bereich von 0-22 liegt, und wobei
• R2 ausgewählt ist aus der Gruppe umfassend Wasserstoff und die aliphatischen Kohlenwasserstoffe mit 5 bis 150 Kohlenstoffatomen
• R3 ausgewählt ist aus der Gruppe umfassend Wasserstoff und die aliphatischen Kohlenwasserstoffe mit 5 bis 150 Kohlenstoffatomen, wobei wenigstens einer der beiden Reste R2 und R3 nicht Wasserstoff ist, und wobei
• R4 ausgewählt ist aus der Gruppe umfassend -H; -(CH₂)ₚ-CH₃; -Aryl; -Cycloalkyl, wobei p eine ganze Zahl ist und im Bereich von 0-22 liegt, und wobei
• R5 ausgewählt ist aus der Gruppe umfassend -H ; -(CH₂)ₚ-CH₃; -Aryl; -Cycloalkyl, wobei p eine ganze Zahl ist und im Bereich von 0-22 liegt, und wobei
• q eine ganze Zahl im Bereich von 1 bis 10 ist, r eine ganze Zahl im Bereich von 1 bis 10 ist, und wobei s eine ganze Zahl im Bereich von 1 bis 10 ist,
wobei mindestens einer der beiden Reste R2 und R3 ein aliphatischer Kohlenwasserstoff mit 16 bis 22 oder 50 bis 70 Kohlenstoffatomen ist.

2. Polyol gemäß Anspruch 1, wobei X eine Carbonyl-Einheit ist.

3. Polyol gemäß einem der Ansprüche 1 oder 2, wobei m im Bereich 1 bis 5 liegt.

4. Polyol gemäß einem der Ansprüche 1 bis 3, wobei n im Bereich 1 bis 10 liegt.

5. Polyol gemäß einem der Ansprüche 1 bis 4, wobei z im Bereich 1 bis 30 liegt.

6. Polyol gemäß einem der vorangehenden Ansprüche, wobei R1, R4 und R5 jeweils unabhängig voneinander ausgewählt sind aus der Gruppe umfassend -H und -(CH₂)ₚ-CH₃, wobei p = 0.

7. Polyol gemäß einem der vorangehenden Ansprüche, wobei o im Bereich von 1 bis 5, bevorzugt 1 bis 3, und/oder q im Bereich von 1 bis 5 liegt.

8. Polyol gemäß einem der vorangehenden Ansprüche, wobei r im Bereich von 1 bis 5 liegt und/oder R4 ausgewählt ist aus der Gruppe H und -(CH₂)ₚ-CH₃, wobei p = 0.

9. Polyol gemäß einem der vorangehenden Ansprüche, wobei Y der Kohlenwasserstoffrest eines polyhydroxyfunktionellen Polyols mit einer Funktionalität von 1,5 bis 4 ist.

10. Verfahren zur Herstellung eines Polyetherester-Polyols gemäß einem der Ansprüche 1 bis 9 durch katalysierte Umsetzung mindestens eines Alkylenoxids mit mindestens einem H-funktionellen Starter in Gegenwart mindestens eines alkylkettensubstituierten Säureanhydrids, wobei das alkylkettensubstituierte Säureanyhdrid ausgewählt ist aus der Gruppe umfassend Alkylbemsteinsäureanyhdride mit 16 oder 18 Kohlenstoffatomen, polyisobutensubstituiertes Bernsteinsäureanhydrid, sowie Mischungen daraus.

11. Verfahren zur Herstellung eines Polyetherester-Polyols gemäß Anspruch 10, wobei der H-funktionelle Starter ausgewählt ist aus der Gruppe umfassend Alkylenoxid-Anlagerungsprodukte polyfunktioneller Alkohole.

12. Verfahren zur Herstellung eines Polyetheresterpolyols gemäß Anspruch 10 oder 11, wobei ein DMC-Katalysator verwendet wird.

13. Verfahren zur Herstellung eines Polyetherester-Polyols gemäß Anspruch 12, wobei zusätzlich zu dem DMC-Katalysator eine Verbindung als Co-Katalysator verwendet wird, die Esterifizierungs- und/ oder Transesterifizierungsreaktionen katalysiert.

14. Verfahren zur Herstellung eines Polyetherester-Polyols gemäß einem der Ansprüche 10 bis 13, wobei das Alkylenoxid ausgewählt ist aus der Gruppe umfassend Butylenoxid, Propylenoxid und Ethylenoxid.

15. Verfahren zur Herstellung von Polyurethanwerkstoffen, bei dem man a) organische Polyisocyanate mit b1) Polyetherester-Polyolen gemäß einer der Ansprüche 1-9, gegebenenfalls b2) weiteren Polyolen sowie Kettenverlängerungs- und/oder Vernetzungsmitteln, c) Treibmitteln, d) Katalysatoren und gegebenenfalls e) Hilfsmitteln und Zusatzstoffen zu einer Reaktionsmischung vermischt und diese Reaktionsmischung zur Reaktion bringt, wobei die Polyole (b2) ausgewählt werden aus der Gruppe umfassend Polyetherole (b2i), Polyesterole (b2ii), Polycarbonatpolyole (b2iii) und Polyacrylatpolyole (b2iv).

16. Verwendung von Polyetherester-Polyolen gemäß einem der Ansprüche 1 bis 9 zur Herstellung von Polyurethanwerkstoffen.

## Claims

1. A polyetherester polyol having an acid number of less than 20 mg KOH/g, measured according to DIN 53402, and a composition as follows:
Y-{O-[CH₂-CHR1-O]ₘ-{[C(O)-CHR2-CHR3-X-O-]_{q}-[CH₂-CHR5-O]ₙ}_{z}-[CH₂-CHR4-O]ᵣ-H}ₛ,
where
• m, n and z are each integers, with m being situated in the range 0-10, n in the range 1-20, and z in the range of 1-50, and where
• X is selected from =CO or -(CH₂)ₒ-, where o is an integer and is in the range of 0-10, and where
• Y is the hydrocarbon radical of a polyhydroxy-functional polyol having a functionality of 1.5 - 8 and an equivalent weight of 100 to 1000, and where
• R1 is selected from the group encompassing -H; -(CH₂)ₚ-CH₃; -aryl; -cycloalkyl, where p is an integer and is in the range of 0-22, and where
• R2 is selected from the group encompassing hydrogen and the aliphatic hydrocarbons having 5 to 150 carbon atoms
• R3 is selected from the group encompassing hydrogen and the aliphatic hydrocarbons having 5 to 150 carbon atoms, and at least one of the two radicals R2 and R3 is not hydrogen, and where
• R4 is selected from the group encompassing -H; -(CH₂)ₚ-CH₃; -aryl; -cycloalkyl, where p is an integer and is in the range of 0-22, and where
• R5 is selected from the group encompassing -H; -(CH₂)ₚ-CH₃; -aryl; -cycloalkyl, where p is an integer and is in the range of 0-22, and where
• q is an integer in the range from 1 to 10, r is an integer in the range from 1 to 10, and s is an integer in the range from 1 to 10,
where at least one of the two radicals R2 and R3 is an aliphatic hydrocarbon having 16 to 22 or 50 to 70 carbon atoms.

2. The polyol according to claim 1, where X is a carbonyl unit.

3. The polyol according to either of claims 1 and 2, where m is in the range 1 to 5.

4. The polyol according to any of claims 1 to 3, where n is in the range 1 to 10.

5. The polyol according to any of claims 1 to 4, where z is in the range 1 to 30.

6. The polyol according to any of the preceding claims, where R1, R4, and R5 each independently of one another are selected from the group encompassing -H and -(CH₂)ₚ-CH₃ where p = 0.

7. The polyol according to any of the preceding claims, where o is in the range from 1 to 5, preferably 1 to 3, and/or q is in the range from 1 to 5.

8. The polyol according to any of the preceding claims, where r is in the range from 1 to 5 and/or R4 is selected from the group consisting of H and-(CH₂)ₚ-CH₃ where p = 0.

9. The polyol according to any of the preceding claims, where Y is the hydrocarbon radical of a polyhydroxy-functional polyol having a functionality of 1.5 to 4.

10. A process for preparing a polyetherester polyol according to any of claims 1 to 9 by catalyzed reaction of at least one alkylene oxide with at least one H-functional starter compound in the presence of at least one alkyl-chain-substituted acid anhydride, where the alkyl-chain-substituted acid anhydride is selected from the group encompassing alkylsuccinic anhydrides having 16 or 18 carbon atoms, polyisobutene-substituted succinic anhydride, and mixtures thereof.

11. The process for preparing a polyetherester polyol according to claim 10, where the H-functional starter compound is selected from the group encompassing alkylene oxide adducts of polyfunctional alcohols.

12. The process for preparing a polyetherester polyol according to claim 10 or 11, where a DMC catalyst is used.

13. The process for preparing a polyetherester polyol according to claim 12, where further to the DMC catalyst a co-catalyst compound is used which catalyzes esterification and/or transesterification reactions.

14. The process for preparing a polyetherester polyol according to any of claims 10 to 13, where the alkylene oxide is selected from the group encompassing butylene oxide, propylene oxide, and ethylene oxide.

15. A process for producing polyurethane materials, wherein a) organic polyisocyanates are mixed to a reaction mixture with b1) polyetherester polyols according to any of claims 1-9, optionally b2) further polyols, and also chain extenders and/or crosslinking agents, c) blowing agents, d) catalysts, and optionally e) auxiliaries and additives, and this reaction mixture is reacted, the polyols (b2) being selected from the group encompassing polyetherols (b2i), polyesterols (b2ii), polycarbonate polyols (b2iii) and polyacrylate polyols (b2iv).

16. The use of a polyetherester polyol according to any of claims 1 to 9 for producing polyurethane materials.

## Revendications

1. Polyétheresterpolyol présentant un indice d'acide inférieur à 20 mg de KOH/g, mesuré selon la norme DIN 53402, et la composition suivante :
Y-{O-[CH₂-CHR1-O]ₘ-{[C(O)-CHR2-CHR3-X-O-]_{q}-[CH₂-CHR5-O]ₙ}_{z}-[CH₂-CHR4-O]ᵣ-H}ₛ
où
- m, n et z sont à chaque fois des nombres entiers et m se situe dans la plage de 0-10, n se situe dans la plage de 1-20 et z se situe dans la plage de 1-50 et où
- X est choisi parmi =CO ou -(CH₂)ₒ-, o étant un nombre entier et situé dans la plage de 0-10, et où
- Y représente le radical hydrocarboné d'un polyol à fonctionnalité polyhydroxy, présentant une fonctionnalité de 1,5-8 et un poids équivalent de 100 à 1000, et où
- R1 est choisi dans le groupe comprenant -H ;-(CH₂)ₚ-CH₃ ; -aryle ; -cycloalkyle, p étant un nombre entier et situé dans la plage de 0-22, et où
- R2 est choisi dans le groupe comprenant l'hydrogène et les hydrocarbures aliphatiques comprenant 5 à 150 atomes de carbone
- R3 est choisi dans le groupe comprenant l'hydrogène et les hydrocarbures aliphatiques comprenant 5 à 150 atomes de carbone, où au moins un des deux radicaux R2 et R3 n'est pas de l'hydrogène, et où
- R4 est choisi dans le groupe comprenant -H ;-(CH₂)ₚ-CH₃ ; -aryle ; -cycloalkyle, p étant un nombre entier et situé dans la plage de 0-22, et où
- R5 est choisi dans le groupe comprenant -H ;-(CH₂)ₚ-CH₃ ; -aryle ; -cycloalkyle, p étant un nombre entier et situé dans la plage de 0-22, et où
- q est un nombre entier dans la plage de 1 à 10, r est un nombre entier dans la plage de 1 à 10, et s est un nombre entier dans la plage de 1 à 10,
où au moins un des deux radicaux R2 et R3 représente un hydrocarbure aliphatique comprenant 16 à 22 ou 50 à 70 atomes de carbone.

2. Polyol selon la revendication 1, X étant une unité carbonyle.

3. Polyol selon l'une quelconque des revendications 1 ou 2, m étant situé dans la plage de 1 à 5.

4. Polyol selon l'une quelconque des revendications 1 à 3, n étant situé dans la plage de 1 à 10.

5. Polyol selon l'une quelconque des revendications 1 à 4, z étant situé dans la plage de 1 à 30.

6. Polyol selon l'une quelconque des revendications précédentes, R1, R4 et R5 étant choisis à chaque fois indépendamment les uns des autres dans le groupe comprenant -H et -(CH₂)ₚ-CH₃, où p = 0.

7. Polyol selon l'une quelconque des revendications précédentes, o étant situé dans la plage de 1 à 5, de préférence de 1 à 3 et/ou q étant situé dans la plage de 1 à 5.

8. Polyol selon l'une quelconque des revendications précédentes, r étant situé dans la plage de 1 à 5 et/ou R4 étant choisi dans le groupe formé par H et -(CH₂)ₚ-CH₃, où p = 0.

9. Polyol selon l'une quelconque des revendications précédentes, Y représentant un radical hydrocarboné d'un polyol à fonctionnalité polyhydroxy présentant une fonctionnalité de 1,5 à 4.

10. Procédé pour la préparation d'un polyétheresterpolyol selon l'une quelconque des revendications 1 à 9 par transformation catalysée d'au moins un oxyde d'alkylène avec au moins un initiateur à fonctionnalité H en présence d'au moins un anhydride d'acide substitué par une chaîne alkyle, l'anhydride d'acide substitué par une chaîne alkyle étant choisi dans le groupe comprenant les anhydrides de l'acide alkylsuccinique comprenant 16 ou 18 atomes de carbone, l'anhydride de l'acide succinique substitué par polyisobutène et leurs mélanges.

11. Procédé pour la préparation d'un polyétheresterpolyol selon la revendication 10, l'initiateur à fonctionnalité H étant choisi dans le groupe comprenant les produits d'addition d'oxyde d'alkylène sur des alcools polyfonctionnels.

12. Procédé pour la préparation d'un polyétheresterpolyol selon la revendication 10 ou 11, un catalyseur de type DMC étant utilisé.

13. Procédé pour la préparation d'un polyétheresterpolyol selon la revendication 12, un composé étant utilisé comme cocatalyseur, en plus du catalyseur de type DMC, qui catalyse des réactions d'estérification et/ou de transestérification.

14. Procédé pour la préparation d'un polyétheresterpolyol selon l'une quelconque des revendications 10 à 13, l'oxyde d'alkylène étant choisi dans le groupe comprenant l'oxyde de butylène, l'oxyde de propylène et l'oxyde d'éthylène.

15. Procédé pour la préparation de matériaux à base de polyuréthane, dans lequel on mélange a) des polyisocyanates organiques avec b1) des polyétheresterpolyols selon l'une quelconque des revendications 1-9, le cas échéant b2) d'autres polyols ainsi que des agents d'allongement de chaîne et/ou des réticulants, c) des agents gonflants, d) des catalyseurs et le cas échéant e) des adjuvants et des additifs en un mélange réactionnel et on fait réagir ce mélange réactionnel, les polyols (b2) étant choisis dans le groupe comprenant les polyétherols (b2i), les polyesterols (b2ii), les polycarbonatepolyols (b2iii) et les polyacrylatepolyols (b2iv).

16. Utilisation de polyétheresterpolyols selon l'une quelconque des revendications 1 à 9 pour la préparation de matériaux à base de polyuréthane.
